(19) Europäisches Patentamt
European Patent Office
Office européen des brevets

(11) Veröffentlichungsnummer : **0 446 222 B1**

# (12) EUROPÄISCHE PATENTSCHRIFT

(45) Veröffentlichungstag der Patentschrift : **03.02.93 Patentblatt 93/05**

(51) Int. Cl.$^5$ : **C03C 25/02**

(21) Anmeldenummer : **89912446.5**

(22) Anmeldetag : **17.11.89**

(86) Internationale Anmeldenummer : **PCT/EP89/01382**

(87) Internationale Veröffentlichungsnummer : **WO 90/06289 14.06.90 Gazette 90/14**

## (54) FLÜSSIGE, STRAHLENHÄRTBARE ÜBERZUGSMASSE FÜR DIE BESCHICHTUNG VON GLASOBERFLÄCHEN.

(30) Priorität : **02.12.88 DE 3840644**

(43) Veröffentlichungstag der Anmeldung : **18.09.91 Patentblatt 91/38**

(45) Bekanntmachung des Hinweises auf die Patenterteilung : **03.02.93 Patentblatt 93/05**

(84) Benannte Vertragsstaaten : **AT BE CH DE ES FR GB IT LI NL SE**

(56) Entgegenhaltungen :
**EP-A- 0 111 280**
**DE-A- 3 437 531**

(56) Entgegenhaltungen :
**Patent Abstracts of Japan, vol. 7, Nr. 61(C-156), 15 March 1983 & JP-A-57209855 (UNITAKA K.K.) 23 December 1982, seeabstract**

(73) Patentinhaber : **BASF Lacke + Farben AG**
**Glasuritstrasse 1**
**W-4400 Münster (DE)**

(72) Erfinder : **SCHUNCK, Stephan, Dr.**
**Maximilianstrasse 37**
**W-4400 Münster (DE)**

(74) Vertreter : **Münch, Volker, Dr. et al**
**c/o BASF Lacke + Farben AG Patentabteilung**
**Glasuritstrasse 1 Postfach 61 23**
**W-4400 Münster (DE)**

EP 0 446 222 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist eine flüssige, strahlenhärtbare Überzugsmasse für die Beschichtung von Glasoberflächen, enthaltend

A) 56 bis 89 Gew.-%, bezogen auf die Überzugsmasse, mindestens eines, gegebenenfalls Harnstoffgruppen enthaltenden, diethylenisch - ungesättigten Polyurethans,

B) 10 bis 30 Gew.-%, bezogen auf die Überzugsmasse, mindestens eines ethylenisch ungesättigten Monomers,

C) 0,5 bis 8 Gew.-%, bezogen auf die Überzugsmasse, mindestens eines Photoinitiators sowie

D) 0,05 bis 6 Gew.-%, bezogen auf die Überzugsmasse, eines Alkoxysilans,

wobei die Summe der Komponenten (A) bis (D) jeweils 100 Gew.-% beträgt.

Gegenstand der vorliegenden Erfindung ist außerdem ein Verfahren zum Beschichten von Glasoberflächen, insbesondere optischen Glasfasern unter Verwendung dieser strahlenhärtbaren Überzugsmassen.

Optische Glasfasern haben eine ständig wachsende Bedeutung auf dem Gebiet der Kommunikation als Lichtwellenleiterfasern erlangt. Für diesen Anwendungszweck ist es unbedingt erforderlich, die Glasoberfläche vor Feuchtigkeit und Abnutzungserscheinungen zu schützen. Die Glasfasern werden daher direkt im Anschluß an ihre Herstellung mit einer schützenden Lackschicht versehen.

So ist es beispielsweise aus der EP-B-114 982 bekannt, Glasfasern zunächst mit einer elastischen, aber wenig harten und wenig zähen Pufferschicht (Grundierung) zu versehen und danach einen strahlenhärtbaren Decklack zu applizieren, der eine hohe Härte und Zähigkeit aufweist. Der zweischichtige Aufbau soll einen guten Schutz der Glasfasern bei mechanischer Beanspruchung auch bei tiefen Temperaturen gewährleisten. Als Decklack werden in der EP-B-114 982 strahlenhärtbare Beschichtunmgszusammensetzungen auf Basis eines diethylenische Endgruppen aufweisenden Polyurethans, eines diethylenisch ungesättigten Esters eines Diglycidylethers eines Bisphenols und eines monoethylenisch ungesättigten Monomers, wobei die Glasübergangstemperatur des aus diesem Monomer hergestellten Homopolymers oberhalb 55°C liegt, eingesetzt. Derartige Glasfaserbeschichtungen weisen jedoch den erheblichen Nachteil einer nur schlechten Haftung auf der Glasoberfläche auf. Insbesondere bei Feuchtigkeitsbelastung wird diese Haftung noch weiter verschlechtert, unter Umständen sogar so stark, daß es zu einem vollständigen Verlust der Haftung auf der Glasoberfläche kommt. Das Problem der schlechten Haftung der Oberzugsmassen auf der Glasoberfläche ist bekannt. Zur Haftungsverbesserung werden daher den Oberzugsmassen häufig Organosilane als Haftvermittler zugesetzt. So ist es beispielsweise aus der EP-B-33043 bekannt, strahlenhärtbaren Beschichtungsmitteln auf Basis von Vinylmonomeren und reaktiven Polymeren (keine Polyurethane), wobei es erfindungswesentlich ist, daß entweder die Vinylmonomeren oder die Polymeren eien Thiiranring aufweisen, Organiosilane als Haftvermittler zuzusetzen. Als Beispiele für geeignete Verbindungen werden γ-Aminopropyltriethoxysilan, N,β-Aminoethyl-γ-aminopropyltrimethoxysilan und γ-Glycidyloxypropyltrimethoxysilan genannt. Auf die Problematik des Haftungsverlustes der Glasfaserbeschichtungen bei Feuchtigkeitsbelastung wird in dieser Schrift nicht eingegangen.

Auch aus der JP-PS-45 138/85 vom 08.10.1985 (entspricht JP-OS 42 244/80 vom 25.03.80) ist es bekannt, Organosilane als Haftvermittler in strahlenhärtbaren Glasfaserbeschichtungsmitteln einzusetzen. Als filmbildende Komponente werden Polymere mit Azidgruppen eingesetzt. Als geeignete Silane werden γ-Methacryloxypropyltrimethoxysilane, γ-Aminopropyltrimethoxysilan und γ-Glycidyloxypropyltrimethoxysilan genannt. Erfindungswesentlich in der JP-PS 45 138 ist aber der Einbau der Azidgruppen in die Polymeren, um so die Härtungsgeschwindigkeit zu erhöhen. Auf die Problematik des Einflußes von Feuchtigkeit auf die Haftung der Glasfaserbeschichtung wird daher auch in dieser Schrift nicht eingegangen. Schließlich sind aus der EP-A-149 741 flüssige, strahlenhärtbare Glasfaserbeschichtungsmittel bekannt, die neben einer strahlenhärtbaren, polyethylenisch ungesättigten polymeren Verbindung 0,5 bis 5 %, bezogen auf die Überzugszusammensetzung, eines Polyalkoxysilans enthalten. Geeignet sind solche Polyalkoxysilane, die einen organischen Substituenten tragen, der ein einzelnes aktives Amino- oder Mercaptyl-Wasserstoffatom trägt, das in einer Michael-Addition mit den ethylenisch ungesättigten Bindungen reagieren kann. Als Beispiel für geeignete Silane wird γ-Mercaptopropyltrimethoxysilan genannt. Gemäß der Lehre der EP-A-149741 gelingt es nur durch Einsatz derartiger Silane, die Haftung auch bei Feuchtigkeitsbelastung zu verbessern. ¨Üblicherweise als Haftvermittler eingesetzter Verbindungen, wie z.B. γ-Aminopropyltriethoxysilan und N-β-(N-Vinylbenzylaminopropyl)-trimethoxysilan dagegen erwiesen sich nach der EP-A-149 741 bei Feuchtigkeitsbelastung als ungeeignet, die Haftung zu verbessern.

Der vorliegenden Erfindung lag daher die Aufgabe zugrunde, strahlenhärtbare Oberzugsmassen für die Beschichtung von Glasoberflächen, insbesondere optischen Glasfasern, zur Verfügung zu stellen, bei denen die resultierende Beschichtung nach Feuchtigkeitsbelastung keinen oder nur einen geringen Verlust der Haftung im Vergleich mit der entsprechenden frisch hergestellten und direkt nach der Aushärtung untersuchten

Beschichtung aufweist.

Die der Erfindung zugrundeliegende Aufgabe wird gelöst durch eine flüssige, strahlenhärtbare Überzugsmasse für die Beschichtung von Glasoberflächen, die

A) 56 bis 89 Gew.-%, bezogen auf die Überzugsmasse, mindestens eines, gegebenenfalls Harnstoffgruppen enthaltendem, diethylenisch ungesättigten Polyurethans,

B) 10 bis 30 Gew.-%, bezogen auf die Überzugsmasse, mindestens eines ethylenisch ungesättigten Monomers,

C) 0,5 bis 8 Gew.-%, bezogen auf die Überzugsmasse, mindestens eines Photoinihators,

D) 0,05 bis 6 Gew.-%; bezogen auf die Überzugsmasse, eines Alkoxysilans,

enthält, wobei die Summe der Komponenten (A) bis (D) jeweils 100 Gew.-% beträgt.

Die Überzugsmasse ist dadurch gekennzeichnet, daß als Komponente (D) N-β-Aminoethyl-γ-aminopropyltrimethoxysilan oder γ-Aminopropyltrimethoxysilan oder N-Methyl-γ-aminopropyltrimethoxysilan oder triaminomodifiziertes Propyltrimethoxysilan eingesetzt wird.

Es war angesichts der Vielzahl von als Haftvermittler bekannter Organosilicium-Verbindungen überraschend und nicht vorhersehbar, daß durch den Einsatz von N-β-Aminoethyl-γ-aminopropyltrimethoxysilan, y-Aminopropyltrimethoxysilan, N-Methyl-γ-aminopropyltrimethoxysilan und triaminomodifiziertem Propyltrimethoxysilan (z.B. Haftvermittler DYNASYLAN®, Typ "TRIAMO", Handelsproduckt der Dynamit-Nobel Chemie)die Haftung von strahlenhärtbaren Beschichtungsmitteln auf Basis von ungesättigten Polyurethanen auf Glasoberflächen bei Feuchtigkeitsbelastung gar nicht oder nur unwesentlich verschlechtert wird, während es bei Einsatz anderer bekannter Haftvermittler, wie z.B. γ-Glycidyloxypropyltrimethoxysilan und dem Monohydrochlorid des N-β-(N-Vinylbenzylamino)ethyl-γ-aminopropyltrimethoxysilans bei Feuchtigkeitsbelastung zu einer erheblichen Verschlechterung der Haftung kommt.

Im folgenden wird nun die erfindungsgemäße Überzugsmasse näher erläutert:

Die als filmbildende Komponente eingesetzten diethylenisch ungesättigten Polyurethane (A) können erhalten werden durch Umsetzung eines Di- oder Polyisocyanates mit einem Kettenverlängerungsmittel aus der Gruppe der Diole/Polyole und/oder DIamine/Polyamine und/oder Dithiole/Polythiole und/oder Alkanolamine und anschließender Umsetzung der restlichen freien Isocyanatgruppen mit mindestens einem Hydroxialkylacrylat oder Hydroxialkylester anderer ethylenisch ungesättigter Carbonsäuren.

Die Mengen an Kettenverlängerungsmittel, Di- bzw. Polyisocyanat und Hydroxialkylester einer ethylenisch ungesättigten Carbonsäure werden dabei so gewählt, daß

1.) das Äquivalentverhältnis der NCO-Gruppen zu den reaktiven Gruppen des Kettenverlängerungsmittels (Hydroxyl-, Amino bzw. Mercaptylgruppen) zwischen 3 : 1 und 1:2 , bevorzugt bei 2:1 liegt und

2.) die OH-Gruppen der Hydroxialkylester der ethylenisch ungesättigten Carbonsäuren in stöchiometrischer Menge in bezug auf die noch freien Isocyanatgruppen des Präpolymeren aus Isocyanat und Kettenverlängerungsmittel vorliegen.

Außerdem ist es möglich, die Polyurethane (A) herzustellen, indem zunächst ein Teil der Isocyanatgruppen eines Di- oder Polyisocyanates mit mindestens einem Hydroxialkylester einer ethylenisch ungesättigten Carbonsäure umgesetzt wird und die restlichen Isocyanatgruppen anschließend mit einem Kettenverlängerungsmittel umgesetzt werden. Auch in diesem Fall werden die Mengen an Kettenverlängerungsmittel, Isocyanat und Hydroxialkylester ungesättigter Carbonsäuren so gewählt, daß das Äquivalentverhältnis der NCO-Gruppen zu den reaktiven Gruppen des Kettenverlängerungsmittels zwischen 3:1 und 1:2, bevorzugt bei 2:1 liegt und das Äquivalentverhältnis der restlichen NCO-Gruppen zu den OH-Gruppen des Hydroxyalkylesters 1 : 1 beträgt.

Selbstverständlich sind auch sämtliche Zwischenformen dieser beiden Verfahren möglich. Beispielsweise kann ein Teil der Isocyanatgruppen eines Diisocyanates zunächst mit einem Diol umgesetzt werden, anschließend ein weiterer Teil der Isocyanatgruppen mit dem Hydroxialkylester einer ethylenisch ungesättigten Carbonsäure und im Anschluß hieran können die restlichen Isocyanatgruppen mit einem Diamin umgesetzt werden.

Diese verschiedenen Herstellverfahren der Polyurethane sind bekannt (vgl. beispielsweise EP-A-204 161) und bedürfen daher keiner genaueren Beschreibung.

Für die Herstellung der Polyurethane (A) geeignet sind aromatische, aliphatische und cycloaliphatische Di- und Polyisocyanate, wie z.B. 2,4-, 2,6-Toluylendiisocyanat und deren Gemische, 4,4′-Diphenylmethandiisocyanat, m-Phenylen-, p-Phenylen-, 4,4′-Diphenyl-, 1,5-Naphthalin-, 1,4-Naphthalin-, 4,4′-Toluidin, Xylylendiisocyanat sowie substituierte aromatische Systeme, wie z.B. Dianisidindiisocyanate, 4,4′-Diphenyletherdiisocyanate oder Clorodiphenylendiisocyanate und höherfunktionelle aromatische Isocyanate, wie z.B. 1,3,5-Triisocyanatobenzol, 4,4′-,4"-Triisocyanattriphenylmethan, 2,4,6-Triisocyanatotoluol und 4,4′-Diphenyldimethylmethan-2,2′,5,5′-tetraisocyanat; cycloaliphatische Isocyanate, wie z.B. 1,3-Cyclopentan-, 1,4-Cyclohexan-, 1,2-Cyclohexan, 4,4′- Methylen-bis-(cyclohexylisocyanat) und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Tris-hexamethylen-triisocyanat sowie die in der EP-A-204161, Spalte 4, Zeilen 42 bis 49 beschriebenen von Dimerfettsäuren abgeleiteten Diisocyanate.

Bevorzugt eingesetzt werden 2,4-und 2,6-Toluylendiisocyanat, 4,4'-Diphenylmethandiisocyanat, Hexamethylendiisocyanat, Isophorondiisocyanat und 4,4'-Methylenbis-(cyclohexylisocyanat).

Beispiele für geeignete Di- und Polyole sind z.B. Ethylenglykol, Propylenglykol-1,2 und-1,3, Butandiole, Pentandiole, Neopentylglykol, Hexandiole, 2-Methylpentandiol-1,5, 2-Ethylbutandiol-1,4, Dimethylolcyclohexan, Glycerin, Trimethylolethan, Trimethylolpropan und Trimethylolbutan, Erythrit, Mesoerythrit, Arabit, Adonit, Xylit, Mannit, Sorbit, Dulcit, Hexantriol, (Poly)-Pentaerythritol; ferner Monoether, wie Diethylenglykol und Dipropylenglykol sowie Polyether, die Addukte aus den genannten Polyolen und Alkylenoxiden. Beispiele von Alkylenoxiden, sie sich für eine Polyaddition an diese Polyole unter Bildung von Polyethern eignen, sind Ethylenoxid, Propylenoxid, Butylenoxid und Styroloxid. Man bezeichnet diese Polyadditionsprodukte im allgemeinen als Polyether mit endständigen Hydroxylgruppen. Sie können linear oder verzweigt sein. Beispiele von solchen Polyethern sind Polyoxyethylenglykole von einem Molekulargewicht von 200 bis 4000, Polyoxypropylenglykole mit einem Molekulargewicht von 200 bis 4000, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Geeignete Polyetherpolyole sind auch diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrimethylolethan, Trimethylolpropan, 1,2,6-Hexantriol, Dipentaerythrit, Tripentaerythrit, Polypentaerythrit, Methylglukosiden und Saccharose mit Alkylenoxiden, wie Ethylenoxid, Propylenoxid oder Mischungen davon. Beispiele für geeignete Polyetherdiole sind auch die Polymerisationsprodukte des Tetrahydrofurans oder Butylenoxids. Einsetzbar sind weiterhin auch Polyesterpolyole, bevorzugt Polyesterdiole, die z.B. herstellbar sind durch Umsetzung von den bereits genannten Glykolen mit Dicarbonsäuren, wie z.B. Phthalsäure, Isophthalsäure, Hexahydrophthalsäure, Adipinsäure, Azelain-, Sebazin-, Malein-, Glutar-, Tetrachlorphthalsäure und Hexachlorheptandicarbonsäure. Anstelle dieser Säuren können auch ihre Anhydride, soweit sie existieren, verwendet werden.

Einsetzbar sind auch Polycaprolactondiole und -triole. Diese Produkte erhält man beispielsweise durch Umsetzung eines ε-Caprolactons mit einem Diol. Solche Produkte sind in der US-PS 3 169 945 beschrieben. Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\displaystyle O}{\overset{\|}{C}}-(CHR)_n-CH_2O-$$

entsprechen, in der n bevorzugt 4 bis 6 ist und der Substituent Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden.

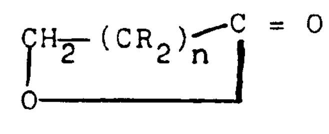

in der n und R die bereits angegebene Bedeutung haben. Die bei der Erfindung für die Herstellung der Polyesterdiole bevorzugten Lactone sind die Caprolactone, bei denen n den Wert 4 hat. Das am meisten bevorzugte Lacton ist das substituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder

in Kombination benutzt werden.

Beispiele von für die Umsetzung mit dem Lacton geeigneten aliphatischen Diolen sind die bereits oben für die Umsetzung mit den Carbonsäuren aufgeführten Diole.

Beispiele für geeignete Amine sind Ethylendiamin, Tri-, Tetra-, Penta-, Hexa-, Hepta-, Nona-, Deca- und Dodecamethylendiamin, 2,2,4 bzw. 2,4,4-Trimethylhexamethylendiamin, Propylendiamin sowie die entsprechenden Polyalkylendiamine, wie z.B. Polypropylendiamin, Polyetherdiamine mit einem Molekulargewicht von 200 bis 4000, z.B. Polyoxylethylendiamin, Polyoxypropylendiamin, Poloxytetramethylendiamin, 1,3- bzw. 1,4-Butylendiamin, Isophorondiamin, 1,2- und 1,4-Diaminocyclohexan, 4,4'-Diaminodicyclohexylmethan, Bis - (3-methyl-4-aminocyclohexyl-)methan, 2,2-Bis(4-aminocyclohexyl-)propan, 4,7-Dioxadecan-1,10-diamin, 4,9-Dioxadodecan-1,12-diamin, 7-Methyl-4,- 10-dioxatridecan-1,13-diamin, Nitriltris-(ethanamin), Ethanolamin, Propanolamin, N-(2-Aminoethyl)ethanol, Polyetherpolyamine, Bis-(3-aminopropyl-)methylamin, 3-Amino-1-(methylamino-)propan, 3-Amino-1-(cyclohexylamino-)propan, N-(2-hydroxiethyl)ethylendiamin, Tris-(2-aminoethyl)-amin sowie Polyamine der Formel $H_2N\text{-}(R_2\text{-}NH)_n R_1\text{-}NH_2$. n ist eine ganze Zahl zwischen 1 und 6, bevorzugt 1 - 3. $R_1$ und $R_2$ sind gleiche oder verschiedene Alkylengruppen bzw. Cycloalkylengruppen bzw. Ethergruppen enthaltende Alkylengruppen mit 2-6, bevorzugt 2-4 C-Atomen. Beispiele für derartige Polyalkylenpolyamine sind Diethylentriamin, Triethylentetramin, Tetraethylenpentamin, Dipropylentriamin, Tripropylentetramin, Tetrapropylenpentamin und Dibutylentriamin.

Als Kettenverlängerungsmittel einsetzbar sind auch Di- und Polythiole, wie z.B. Dithioethylenglykol, 1,2- und 1,3-Propandithiol, Butandithiole, Pentandithiole, Hexandithiole sowie die übrigen S-H analogen Verbindungen der aufgeführten Di- und Polyole.

Zur Einführung der ethylenisch-ungesättigten Gruppen in das Polyurethan geeignet sind Hydroxialkylester ethylenisch ungesättigter Carbonsäuren, wie z.B. Hydroxiethylacrylat, Hydroxipropylacrylat, Hydroxibutylacrylat, Hydroxiamylacrylat, Hydroxihexylacrylat, Hydroxioctylacrylat sowie die entsprechenden Hydroxialkylester der Methacryl-, Fumar-, Malein-, Itacon-, Croton- und Isocrotonsäure.

Das ungesättigte Polyurethan wird in den Oberzugsmassen in einer Menge von 56 bis 89 Gew.-%., bezogen auf die Überzugsmasse, eingesetzt.

Neben dem gerade beschriebenen Polyurethan (A) enthält das erfindungsgemäße Überzugsmittel noch 10 bis 30 Gew.-%, bezogen auf die Oberzugsmasse, mindestens eines ethylenisch-ungesättigten Monomers (B). Beispiele für geeignete Monomere sind Ethoxiethoxiethylacrylat, N-Vinylpyrrolidon, Phenoxiethylacrylat, Dimethylaminoethylacrylat, Hydroxiethylacrylat, Butoxiethylacrylat, Isobornylacrylat, Dimethylacrylamid und Dicyclopentylacrylat. Geeignet sind außerdem Di- und Polyacrylate, wie z.B. Butandioldiacrylat, Trimethylolpropandi- und Triacrylat, Pentaerythritdiacrylat sowie die in der EP-A-250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxybutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist.

Geeignet sind auch Mischungen der gerade beschriebenen Monomeren.

Bevorzugt eingesetzt werden N-Vinylpyrrolidon, Phenoxiethylacrylat, Isobornylacrylat sowie Mischungen dieser Monomere.

Der in den erfindungsgemäßen Überzugsmassen in einer Menge 0,5 bis 8 Gew.-%, bevorzugt 2 bis 5 Gew.-%, bezogen auf die Überzugsmasse, eingesetzte Photoinitiator variiert mit der zur Härtung der Beschichtungsmittel eingesetzten Strahlung (UV-Strahlung, Elektronenstrahlung, sichtbares Licht). Bevorzugt werden die erfindungsgemäßen Überzugsmassen mittels UV-Strahlung gehärtet. In diesem Fall werden üblicherweise Photoinitiatoren auf Keton-Basis eingesetzt, beispielsweise Acetophenon, Benzophenon, Diethoxyacetophenon, m-Chloroacetophenon, Propiophenon, Benzoin, Benzil, Benzildimethylketal, Anthrachinon, Thioxanthon und Thixanthon-Derivate sowie Mischungen verschiedener Photoinitiatoren. Gegebenenfalls können zusammen mit den genannten Photoinitiatoren verschiedene Amine, z.B. Diethylamin und Triethanolamin, in Mengen bis zu 4 Gew.-%, bezogen auf die Überzugsmasse, eingesetzt werden, die als Synergisten wirken.

Als erfindungswesentlichen Bestandteil enthalten die Überzugsmassen 0,05 bis 6 Gew.-%, bezogen auf die Überzugsmasse, N,β-Aminoethyl-γ-aminopropyltrimethoxysilan, γ-Aminopropyltrimethoxysilan, N-Methyl-γ-aminopropyltrimethoxysilan oder triaminomodifiziertes Propyltrimethoxysilan(z.B. Haftvermittler DYNASYLA® "Typ TRIAMO", Handelsprodukt der Dynamit Nobel Chemie). Diese Alkoxysilane sind handelsübliche Produkte und brauchen daher nicht näher erläutert werden. Bevorzugte Oberzugsmittel werden erhalten, indem entweder 0,5 bis 2 Gew.-%., bezogen auf die Überzugsmasse, N,β-Aminoethyl-γ-aminopropyltrimethoxysilan oder 2 bis 4 Gew.-%., bezogen auf die Überzugsmasse, γ-Aminopropyltrimethoxysilan oder 3 bis 5 Gew.-%., bezogen auf die Überzugsmasse, N-Methyl-γ-aminopropyltrimethoxysilan oder 4 bis 6 Gew.-%., bezogen auf die Überzugsmasse, triaminomodifiziertes Propyltrimethoxysilan (z.B. Haftvermittler DYNASYLAN® "Typ TRIAMO" Handelsprodukt der Dynamit Nobel Chemie) als Komponente (D) eingesetzt werden.

Die erfindungsgemäßen Überzugsmassen können ggf. außerdem noch übliche Hilfs- und Zusatzstoffe in üblichen Mengen, bevorzugt 0,05 bis 10 Gew.-%, bezogen auf die Überzugsmasse, enthalten. Beispiele für derartige Stoffe sind Verlaufsmittel und Weichmacher. Die Oberzugsmassen können mittels bekannter Applikationsmethoden, wie z.B. Spritzen, Walzen, Fluten, Tauchen, Rakeln oder Streichen, auf die Glasoberfläche aufgebracht werden.

Die Härtung der Lackfilme erfolgt mittels Strahlung, bevorzugt mittels UV-Strahlung. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA Technology, Academic Press, London, United Kingdom 1984) und bedürfen keiner weiteren Beschreibung.

Gegenstand der vorliegenden Erfindung ist auch ein Verfahren zum Beschichten einer Glasoberfläche, bei dem

I.) eine strahlenhärtbare Überzugsmasse aufgebracht wird, die

A) 56 bis 89 Gew.-%, bezogen auf die Überzugsmasse, mindestens eines, gegebenenfalls Harnstoffgruppen enthaltenden, diethylenisch ungesättigten Polyurethans,
B) 10 bis 30 Gew.-%, bezogen auf die Überzugsmasse, mindestens eines ethylenisch ungesättigten Monomers,
C) 0,5 bis 8 Gew.-%, bezogen auf die Überzugsmasse, mindestens eines Photoinitiators sowie
D) 0,05 bis 6 Gew.-%, bezogen auf die Überzugsmasse, eines Alkoxysilans,

enthält, wobei die Summe der Komponenten (A) bis (D) jeweils 100 Gew.-% beträgt,

II.) die Überzugsmasse mittels UV- oder Elektronenstrahlung gehärtet wird.

Das Verfahren ist dadurch gekennzeichnet, daß die Überzugsmasse als Komponente (D) N-β-Aminoethyl-γ-aminopropyltrimethoxysilan oder γ-Aminopropyltrimethoxysilan oder N-Methyl-γ-aminopropyltrimethoxysilan oder triaminomodifiziertes Propyltrimethoxysilan enthält.

Zur näheren Beschreibung des in dem erfindungsgemäßen Verfahren eingesetzten Überzugsmittels sowie der Durchführung dieses Verfahrens wird auf die Seiten 5 bis 13 dieser Beschreibung verwiesen.
Das erfindungsgemäße Verfahren ist besonders gut geeignet für die Beschichtung von optischen Glasfasern. Insbesondere bei Verwendung der optischen Glasfasern als Lichtwellenleiter ist es wichtig, daß die zum Schutz der Oberfläche applizierten Überzugsmassen auch bei Feuchtigkeitsbelastung eine gute Haftung auf der Glasfaseroberfläche aufweisen. Haftungsverluste der Beschichtung nach Feuchtigkeitsbelastung - die sich bei der Verwendung der Glasfasern als Lichtwellenleiter nicht vermeiden läßt - (z.B. liegen Glasfasern an Kopplungsstationen frei an der Luft) führen zu Lackschäden auf der Glasfaseroberfläche. Diese dann ungeschützte Oberfläche kann nun sehr leicht, beispielsweise durch Staubkörner, beschädigt werden, was zu einem Verlust der optischen Eigenschaften führt. Gerade durch das erfindungsgemäße Verfahren bzw. die erfindungsgemäßen Überzugsmassen ist es aber möglich, diese Nachteile zu vermeiden und Beschichtungen mit sehr guter Haftung auch nach Feuchtigkeitsbelastung zur Verfügung zu stellen.

Die erfindungsgemäßen Überzugsmassen können dabei entweder in Form einer Einschichtlackierung oder als Grundierung einer Zweischichtlackierung auf die Glasfaser aufgebracht werden. Geeignete Decklacke im Fall der Zweischichtlackierung sind beispielsweise in der EP-B- 114 982 beschrieben.

Die Erfindung wird in den folgenden Beispielen näher erläutert. Alle Angaben über Teile und Prozentsätze sind Gewichtsangaben, falls nicht ausdrücklich etwas anderes festgestellt wird.

Beispiel 1 (Vergleich)

Es wird nach bekannten Methoden (vgl. z.B. EP-B-114 982) eine strahlenhärtbare Überzugsmasse, bestehend aus 75,8 Teilen ungesättigten Polyurethan, 9,2 Teilen Trimethylolpropantriacrylat, 12 Teilen Phenoxiethylacrylat, 0,5 Teilen Benzildimethylketal und 2,5 Teilen Benzophenon hergestellt, indem in Gegenwart von Trimethylolpropantriacrylat und Phenoxiethylacrylat zunächst 4 Mole 4,4'-Methylen-bis-(cyclohexylisocyanat) mit 2 Molen Polyoxypropylenglykol (Molekulargewicht 1000) umgesetzt werden. Dieses erhaltene Zwischenprodukt wird mit 2 Molen 2-Hydroxiethylacrylat und danach mit 1 Mol Polyoxypropylendiamin (Molekulargewicht 230) umgesetzt. Danach werden die Photoinitiatoren zu der Mischung gegeben.
Gut gereinigte (vor allem fettfreie) Glasplatten (Breite x Länge = 98 x 151 mm) werden am Rand mit Tesakrepp® -Klebeband Nr. 4432 (Breite 19 mm) abgeklebt und die Überzugsmasse aufgerakelt (Trockenfilmstärke 180 /µm).
Die Aushärtung erfolgt mit Hilfe einer UV-Bestrahlungsanlage, ausgerüstet mit zwei Hg-Mitteldruckstrahlern

von je 80 W/cm Lampenleistung, bei einer Bandgeschwindigkeit von 40 m/Minute, in 2 Durchläufen bei Halblastbetrieb (= 40 W/cm).
Die eingestrahlte Dosis beträgt hierbei 0,08 J/cm$^2$ (gemessen mit dem Dosimeter, UVICURE, System EIT der Firma Eltosch ).

Sofort anschließend wird die Haftung wie folgt geprüft:
- Folienanfang vorsichtig mit einer Klinge vom Glas etwas lösen.
- Mit Hilfe von Klebeband einen Drahtbügel an dem gelösten Folienteil befestigen.
- Federwaage einhängen und mit möglichst konstanter Geschwindigkeit in rechtem Winkel abziehen.
- Benötigte Abzugskraft in g von der Meß-Skala ablesen.

Die Auswertung der Haftungsprüfung erfolgt durch Mittelung der erhaltenen Werte aus einer Doppelbestimmung und Oberprüfung der Reproduzierbarkeit von guten (= hohen) Haftungswerten durch mehrere Wiederholungen.

Das Ergebnis der Haftungsprüfung ist in Tabelle 1 dargestellt.
Neben dieser durchgeführten Haftungsprüfung ist auch ein Rollenschälversuch gemäß DIN 55 289 möglich, der aber nicht durchgeführt wurde.
Zur Prüfung der Haftung nach Feuchtigkeitsbelastung werden außerdem die Glasplatten direkt nach der Härtung 12 h in geeigneten Klimakammern mit einer definierten Luftfeuchtigkeit von 90 % relativer Luftfeuchtigkeit (r.F.) (entsprechend DIN 50005) bei Raumtemperatur (25°C) gelagert.
Sofort nach Beendigung der Exposition wird der Abziehtest mit der Federwaage analog der Haftungsprüfung direkt nach Bestrahlung durchgeführt.

Die Auswertung der Haftungsprüfung erfolgt auch in diesem Fall durch Mittelwertbildung aus einer Doppelbestimmung. Bei guten (= hohen) Haftungswerten werden mindestens zwei Wiederholungsmessungen zur Oberprüfung der Reproduzierbarkeit durchgeführt.
Das Ergebnis dieser Prüfung ist ebenfalls in Tabelle 1 dargestellt.

Die durchgeführte Prüfung der Haftung auf Fensterglas ergibt als Labormethode gute, aussagekräftige Ergebnisse. Diese Methode wird auch bei den Glasfaserherstellern durchgeführt, da sie praxisnahe Werte ergibt, die mit den Haftungswerten auf optischen Glasfasern (typische Stärke der Faser 125 /µm) sehr gut übereinstimmen.

Beispiel 2 (Vergleich)

Analog zu dem Vergleichsbeispiel 1 wird ein strahlenhärtbares Beschichtungsmittel auf Basis des ungesättigten Polyurethans hergestellt. Im Unterschied zum Vergleichsbeispiel 1 enthält das Beschichtungsmittel zusätzlich 2 Gew.-%, bezogen auf die Gesamtzusammensetzung γ-Glycidyloxypropyltrimethoxysilan.

Analog zum Vergleichsbeispiel 1 wird dieses Beschichtungsmittel mittels eines Rakels auf Glasplatten aufgetragen (Trockenfilmstärke 180 /µm) und mit einer Quecksilbermitteldruckdampflampe (Dosisleistung ebenfalls 0,08 j /cm$^2$) gehärtet. Direkt nach der Aushärtung der Beschichtungsmittel sowie nach 12 h Lagerung bei 90 % relativer Luftfeuchtigkeit bei Raumtemperatur wird, wie im Vergleichsbeispiel 1 beschrieben, die Haftung der Beschichtung gemessen. Die Ergebnisse sind in Tabelle 1 dargestellt.

Beispiele 3 und 4 (Vergleich)

Analog zu Beispiel 2 werden Glasbeschichtungen hergestellt, jedoch mit dem Unterschied, daß statt 2 Gew.-%, bezogen auf die Gesamtzusammensetzung, γ-Glycidyloxypropyltrimethoxysilan jetzt 2 Gew.-% 3-Butenyltriethoxysilan (Beispiel 3) bzw. 2 Gew.-% des Monohydrochlorids des N-β-(N-Vinylbenzylamino)ethyl-γ-aminopropyltrimethoxysilans (Formel

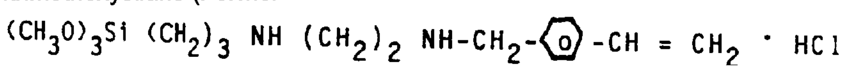

(Beispiel 4), jeweils bezogen auf die Gesamtzusammensetzung, eingesetzt werden.

Die Ergebnisse der Haftungsprüfung sind in Tabelle 1 dargestellt.

Beispiele 5 - 7

Analog zu Beispiel 2 werden Glasbeschichtungen hergestellt, jedoch mit dem Unterschied, daß statt 2 Gew.-% γ-Glycidyloxypropyltrimethoxysilan jetzt 1 (Beispiel 5) bzw. 2 (Beispiel 6) bzw. 3 (Beispiel 7) Gew.-% N-β-Aminoethyl-γ-aminopropyltrimethoxysilan, jeweils bezogen auf die Gesamtzusammensetzung, eingesetzt werden.

Die Ergebnisse der Haftungsprüfung sind in Tabelle 1 dargestellt.

Beispiel 8 - 9

Analog zu Beispiel 2 werden Glasbeschichtungen hergestellt, jedoch mit dem Unterschied, daß statt 2 Gew.-%. $\gamma$-Glycidyloxypropyltrimethoxysilan jetzt 2 (Beispiel 8) bzw. 4 (Beispiel 9) Gew.-%. N-Methyl-$\gamma$-aminopropyltrimethoxysilan, jeweils bezogen auf die Gesamtzusammensetzung, eingesetzt werden.
Die Ergebnisse der Haftungsprüfung sind in Tabelle 1 dargestellt.

Beispiele 10 - 11

Analog zu Beispiel 2 werden Glasbeschichtungen hergestellt, jedoch mit dem Unterschied, daß statt 2 Gew.-% $\gamma$-Glycidyloxypropyltrimethoxysilan jetzt 2 Gew.-% $\gamma$-Aminopropyltrimethoxsilan (Beispiel 10) bzw. 2 Gew.-% triamino-modifiziertes Propyltrimethoxysilan (Haftvermittler DYNASYLAN®, Typ "TRIAMO", Handelsprodukt der Dynamit-Nobel Chemie), jeweils bezogen auf die Gesamtzusammensetzung, eingesetzt werden.
Die Ergebnisse der Haftungsprüfung sind in Tabelle 1 dargestellt.

Tabelle 1

| Beispiel | Haftvermittler (D) | Menge (D) (Gew.-%) | Haftung nach Aush. (kg) | Haftung 12 h, 90 % r.F. (kg) |
|---|---|---|---|---|
| 1 | - | - | 1000-1100 | 25 |
| 2 | γ-Glycidyloxypropyltrimethoxysilan | 2 | 1000-1100 | 50 - 100 |
| 3 | 3-Butenyltriethoxysilan | 2 | 900-1000 | 25 - 50 |
| 4 | Monohydrochlorid des N-β-(N-Vinylbenzylamino)ethyl-γ-aminopropyltrimethoxysilan | 2 | 750-1000 | 150 |
| 5 | N-β-Aminoethyl-γ-aminopropyltrimethoxysilan | 1 | 1000-1100 | 900-1000 |
| 6 | N-β-Aminoethyl-γ-aminopropyltrimethoxysilan | 2 | 1000-1100 | 900-1000 |
| 7 | N-β-Aminoethyl-γ-aminopropyltrimethoxysilan | 3 | 900-1000 | 800-900 |
| 8 | N-Methyl-γ-aminopropyltrimethoxysilan | 2 | 850- 950 | 850-950 |
| 9 | N-Methyl-γ-aminopropyltrimethoxysilan | 4 | 1200-1400 | 1000-1100 |
| 10 | γ-Aminopropyltrimethoxysilan | 2 | 1000-1150 | 750-850 |
| 11 | triaminomodifiziertes Propyltrimethoxysilan ("TRIAMO") | 2 | 1000-1100 | 500 |

Die Beispiele 1 - 11 zeigen, daß durch Zusatz von N-β Aminoethyl-γ -aminopropyltrimethoxysilan, N-Methyl- γ-aminopropyltrimethoxysilan,γ -Aminopropyltrimethoxysilan und dem triaminomodifizierten Propyltrimethoxysilan (Haftvermittler DYNASYLAN®, Typ "TRIAMO", der Dynamit Nobel Chemi)kein oder nur ein sehr geringer Haftungsverlust nach Feuchtigkeitsbelastung auftritt, während bei Zusatz anderer, bekannter Silanhaftvermittler, wie z.B.γ -Glycidyloxypropyltrimethoxysilan , 3-Butenyltriethoxysilan und dem Monohydrochlorid des N-β-(N-Vinylbenzylamino)ethyl-γ-aminopropyltrimethoxysilan, ein erheblicher Haftungsverlust bei Feuchtigkeitsbelastung zu beobachten ist.

## Patentansprüche

**1.** Flüssige, strahlenhärtbare Überzugsmasse für die Beschichtung von Glasoberflächen, enthaltend
A) 56 bis 89 Gew.-%, bezogen auf die Überzugsmasse, mindestens eines, gegebenenfalls Harnstoffgruppen enthaltenden, diethylenisch ungesättigten Polyurethans,
B) 10 bis 30 Gew.-Co, bezogen auf die Überzugsmasse, mindestens eines ethylenisch ungesättigten Monomers,
C) 0,5 bis 8 Gew.-Co, bezogen auf die Überzugsmasse, mindestens eines Photoinitiators sowie
D) 0,05 bis 6 Gew.-%, bezogen auf die Überzugsmasse, eines Alkoxysilans,
wobei die Summe der Komponenten (A) bis (D) jeweils 100 Gew.-% beträgt,
dadurch gekennzeichnet, daß als Komponente (D) N-β-Aminoethyl-γ-aminopropyltrimethoxysilan oder γ-Aminopropyltrimethoxysilan oder N-Methyl-γ-aminopropyltrimethoxysilan oder triaminomodifiziertes Propyltrimethoxysilan eingesetzt wird.

2. Überzugsmasse nach Anspruch 1, dadurch gekennzeichnet, daß sie 0,5 bis 2 Gew.-%, bezogen auf die Überzugsmasse, N-β-Aminoethyl-γ-aminopropyltrimethoxysilan als Komponente (D) enthält.

3. Überzugsmasse nach Anspruch 1, dadurch gekennzeichnet, daß sie 2 bis 4 Gew.-%, bezogen auf die Überzugsmasse, γ-Aminopropyltrimethoxysilan als Komponente (D) enthält.

4. Überzugsmasse nach Anspruch 1, dadurch gekennzeichnet, daß sie 3 bis 5 Gew.-% N-Methyl-γ-aminopropyltrimethoxysilan als Komponente (D) enthält.

5. Überzugsmasse nach Anspruch 1, dadurch gekennzeichnet, daß sie 4 bis 6 Gew.-% triaminomodifiziertes Propyltrimethoxysilan als Komponente (D) enthält.

6. Überzugsmasse nach einem der Ansprüche 1 bis 5, dadurch gekennzeichnet, daß das Monomer (B) N-Vinylpyrrolidon und/oder Phenoxyethylacrylat und/oder Isobornylacrylat ist.

7. Überzugsmasse nach einem der Ansprüche 1 bis 6, dadurch gekennzeichnet, daß, sie zusätzlich mindestens einen Synergisten und/oder übliche Hilfs- und Zusatzstoffe enthält.

8. Verfahren zum Beschichten einer Glasoberfläche, bei dem
I) eine strahlenhärtbare Überzugsmasse aufgebracht wird und
II) die Überzugsmasse mittels UV- oder Elektronenstrahlung gehärtet wird
dadurch gekennzeichnet, daß eine Überzugsmasse nach einem der Ansprüche 1 bis 7, aufgebracht wird.

9. Verfahren nach Anspruch 8, dadurch gekennzeichnet, daß, die Glasoberfläche die Oberfläche einer optischen Glasfaser ist.

10. Optische Glasfaser, dadurch gekennzeichnet, daß sie mit einer Überzugsmasse nach einem der Ansprüche 1 bis 7 beschichtet ist.

11. Verwendung der optischen Glasfaser nach Anspruch 10 als Lichtwellenleiter.

12. Verwendung der strahlenhärtbaren Überzugsmasse nach einem der Ansprüche 1 bis 7 für die Beschichtung von optischen Glasfasern.

## Claims

1. Liquid, radiation-curable coating composition for coating glass surfaces and containing
A) 56 to 89% by weight, based on the coating composition, of at least one diethylenically unsaturated polyurethane optionally containing urea groups,
B) 10 to 30% by weight, based on the coating composition, of at least one ethylenically unsaturated monomer,
C) 0.5 to 8% by weight, based on the coating composition, of at least one photoinitiator, and
D) 0.05 to 6% by weight, based on the coating composition, of an alkoxysilane,
the sum of components (A) to (D) in each case being 100% by weight,
characterised in that component (D) is N-β-aminoethyl-γ-aminopropyltrimethoxysilane or γ-aminopropyltrimethoxysilane or N-methyl-γ-aminopropyltrimethoxysilane or triamino-modified propyltrimethoxysilane.

2. Coating composition according to Claim 1, characterised in that it contains 0.5 to 2% by weight, based on the coating composition, of N-β-aminoethyl-γ-aminopropyltrimethoxysilane as component (D).

3. Coating composition aaccording to Claim 1, characterised in that it contains 2 to 4% by weight, based on the coating composition, of γ-aminopropyltrimethoxysilane as component (D).

4. Coating composition according to Claim 1, characterised in that it contains 3 to 5% by weight of N-methyl-γ-aminopropyltrimethoxysilane as component (D).

5. Coating composition according to Claim 1, characterised in that it contains 4 to 6% by weight of triamino-modified propyltrimethoxysilane as component (D).

6. Coating composition according to any of Claims 1 to 5, characterised in that monomer (B) is N-vinyl-pyrrolidone and/or phenoxyethyl acrylate and/or isobornyl acrylate.

7. Coating composition according to any of Claims 1 to 6, characterised in that it additionally contains at least one synergist and/or customary auxiliaries and additives.

8. Process for coating a glass surface, in which
I) a radiation-curable coating composition is applied,
and
II) the coating composition is cured by means of UV or electron radiation,
characterised in that a coating composition according to any of Claims 1 to 7 is applied.

9. Process according to Claim 8, characterised in that the glass surface is the surface of an optical glass fibre.

10. Optical glass fibre characterised in that it is coated with a coating composition according to any of Claims 1 to 7.

11. Use of an optical glass fibre according to Claim 10 as an optical waveguide.

12. Use of a radiation-curable coating composition according to any of Claims 1 to 7 for coating optical glass fibres.

## Revendications

1. Masse de revêtement liquide, durcissable par rayonnement, pour le revêtement de surfaces de verre, contenant :
(A) 56 à 89% en poids, par rapport à la masse de revêtement, d'au moins un polyuréthanne à insaturation diéthylénique, le cas échéant contenant des groupes urée ;
(B) 10 à 30% en poids, par rapport à la masse de revêtement, d'au moins un monomère à insaturation éthylénique ;
(C) 0,5 à 8% en poids, par rapport à la masse de revêtement, d'au moins un photoinitiateur ; ainsi que
(D) 0,05 à 6% en poids, par rapport à la masse de revêtement, d'un alcoxysilane;
la somme des composants (A) à (D) représentant à chaque fois 100% en poids,
caractérisée par le fait que, comme composant (D), est utilisé le N-β-aminoéthyl-γ-aminopropyltriméthoxysilane ou le γ-aminopropyltriméthoxysilane ou le N-méthyl-γ-aminopropyltriméthoxysilane ou le propyltriméthoxysilane modifié par triamino.

2. Masse de revêtement selon la revendication 1, caractérisée par le fait qu'elle contient 0,5 à 2% en poids, par rapport à la masse de revêtement, de N-β-aminoéthyly-γ-aminopropyltriméthoxysilane comme composant (D).

3. Masse de revêtement selon la revendication 1, caractérisée par le fait qu'elle contient 2 à 4% en poids, par rapport à la masse de revêtement, de y-aminopropyltriméthoxysilane comme composant (D).

4. Masse de revêtement selon la revendication 1, caractérisée par le fait qu'elle contient 3 à 5% en poids de N-méthyl-γ-aminopropyltriméthoxysilane comme composant (D).

5. Masse de revêtement selon la revendication 1, caractérisée par le fait qu'elle contient 4 à 6% en poids de propyltriméthoxysilane modifié par triamino comme composant (D).

**6.** Masse de revêtement selon l'une quelconque des revendications 1 à 5, caractérisée par le fait que le monomère (B) est la N-vinyl pyrrolidone et/ou l'acrylate de phénoxyéthyle et/ou l'acrylate d'isobornyle.

**7.** Masse de revêtement selon l'une quelconque des revendications 1 à 6, caractérisée par le fait qu'elle contient additionnellement au moins un agent de synergie et/ou des additifs et adjuvants usuels.

**8.** Procédé de revêtement d'une surface de verre, suivant lequel
(I) on applique en revêtement une masse de revêtement durcissable par rayonnement ; et
(II) on soumet la masse de revêtement à un durcissement au moyen d'un rayonnement UV ou d'un faisceau électronique,
caractérisé par le fait qu'on applique en revêtement une masse de revêtement telle que définie à l'une quelconque des revendications 1 à 7.

**9.** Procédé selon la revendication 8, caractérisé par le fait que la surface de verre est la surface d'une fibre de verre optique.

**10.** Fibre de verre optique, caractérisée par le fait qu'elle est revêtue par une masse de revêtement telle que définie à l'une quelconque des revendications 1 à 7.

**11.** Utilisation de la fibre de verre optique telle que définie à la revendication 10 comme guide d'ondes lumineuses.

**12.** Utilisation de la masse de revêtement durcissable par rayonnement telle que définie à l'une quelconque des revendications 1 à 7 pour le revêtement de fibres de verre optiques.